# EUROPEAN PATENT APPLICATION

(11) **EP 3 809 619 A1**
(43) Date of publication of application: **21.04.2021**
(21) Application number: 19820130.3
(22) Date of filing: 30.05.2019
(51) Int. Cl.: H04L 5/00

(54) **BEAM STATE DETECTION METHOD AND TERMINAL**

(30) Priority: 15.06.2018 CN 201810623951
(71) Applicant: Vivo Mobile Communication Co., Ltd., Dongguan, Guangdong 523860 (CN)
(72) Inventor: WU, Yumin, Dongguan, Guangdong 523860 (CN); MO, Yitao, Dongguan, Guangdong 523860 (CN); YANG, Yu, Dongguan, Guangdong 523860 (CN)
(74) Representative: Lavoix
(86) International application number: PCT/CN2019/089157
(87) International publication number: WO 2019/237931

(57) **Abstract**

A beam state detection method and a terminal are provided. The beam state detection method is applied to the terminal and includes: monitoring indication information, where the indication information is generated by the terminal when the terminal detects no reference signal used for beam failure detection; and if the indication information is detected, performing beam state detection based on the indication information.

## Description

### CROSS-REFERENCE TO RELATED APPLICATIONS

This application claims priority to Chinese Patent Application No. 201810623951.2, filed in China on June 15, 2018, which is incorporated herein by reference in its entirety.

### TECHNICAL FIELD

This disclosure relates to the field of communications technologies, and in particular, to a beam state detection method and a terminal.

### BACKGROUND

A medium access control (Medium Access Control, MAC) entity of user equipment (User Equipment, UE) (also referred to as a terminal) receives a beam failure instance indication (beam failure instance indication) from a physical layer. Each time after receiving the beam failure instance indication, the MAC entity starts or restarts a beam failure detection timer (Beam Failure Detection Timer), and adds 1 to a beam failure instance counter (BFI_COUNTER). If the beam failure detection timer expires, the beam failure instance counter is reset (for example, set to "0"). When a count value of the beam failure instance counter is equal to a network-configured threshold (for example, beam Failure Instance Max Count), the MAC entity considers that a beam failure has occurred and initiates a beam failure recovery procedure (for example, performing beam recovery by initiating a random access procedure).

For an unlicensed frequency band, before sending a signal, a transmit end needs to monitor whether the frequency band is occupied. If the frequency band is not occupied, the transmit end can send the signal. When a network side is to send, to the UE, a reference signal (such as a synchronous signal block (Synchronous Signal Block, SSB) and/or a channel state information-reference signal (Channel State Information-Reference Signal, CSI-RS)) used for beam failure detection (Beam Failure Detection, BFD), if a frequency is occupied, the network side does not send the reference signal. In a case in which the reference signal used for the BFD is not sent, a very poor measurement result value is obtained by the terminal through measurement. However, a measurement result value is actually good when the reference signal used for BFD is sent. The foregoing case may cause incorrect determining of channel quality as poor by the UE and sending of a "beam failure instance indication", and further leads to incorrect determining of occurrence of a problem with a monitored beam.

### SUMMARY

Embodiments of this disclosure provide a beam state detection method and a terminal, to resolve a problem of proneness to beam state misjudgment due to channel quality determining without consideration of an actual transmission state of a reference signal.

According to a first aspect, an embodiment of this disclosure provides a beam state detection method applied to a terminal, including:
monitoring indication information, where the indication information is generated by the terminal when the terminal detects no reference signal used for beam failure detection; and
if the indication information is detected, performing beam state detection based on the indication information.

According to a second aspect, an embodiment of this disclosure provides a terminal, including:
a monitoring module, configured to monitor indication information, where the indication information is generated by the terminal when the terminal detects no reference signal used for beam failure detection; and
a detection module, configured to: if the indication information is detected, perform beam state detection based on the indication information.

According to a third aspect, an embodiment of this disclosure provides a terminal, including a processor, a memory, and a computer program stored in the memory and capable of running on the processor, where when the computer program is executed by the processor, the steps of the foregoing beam state detection method are implemented.

According to a fourth aspect, an embodiment of this disclosure provides a computer-readable storage medium, where the computer-readable storage medium stores a computer program, and when the computer program is executed by a processor, the steps of the foregoing beam state detection method are implemented.

Beneficial effects of this disclosure are:
In the foregoing solution, a feature of generating the indication information when the reference signal used for beam failure detection is not detected is introduced, so that beam state detection is performed based on the indication information and the terminal can determine channel quality based on an actual transmission state of the reference signal, thereby ensuring accuracy of beam state detection.

### BRIEF DESCRIPTION OF DRAWINGS

FIG. 1 is a schematic flowchart of a beam state detection method according to an embodiment of this disclosure;
FIG. 2 is a schematic diagram of a module of a terminal according to an embodiment of this disclosure; and
FIG. 3 is a structural block diagram of a terminal according to an embodiment of this disclosure.

### DESCRIPTION OF EMBODIMENTS

To make the objectives, technical solutions, and advantages of this disclosure clearer, the following describes the embodiments of this disclosure in detail with reference to the accompanying drawings.

This disclosure provides a beam state detection method and a terminal, to resolve a problem of proneness to beam state misjudgment due to channel quality determining without consideration of an actual transmission state of a reference signal.

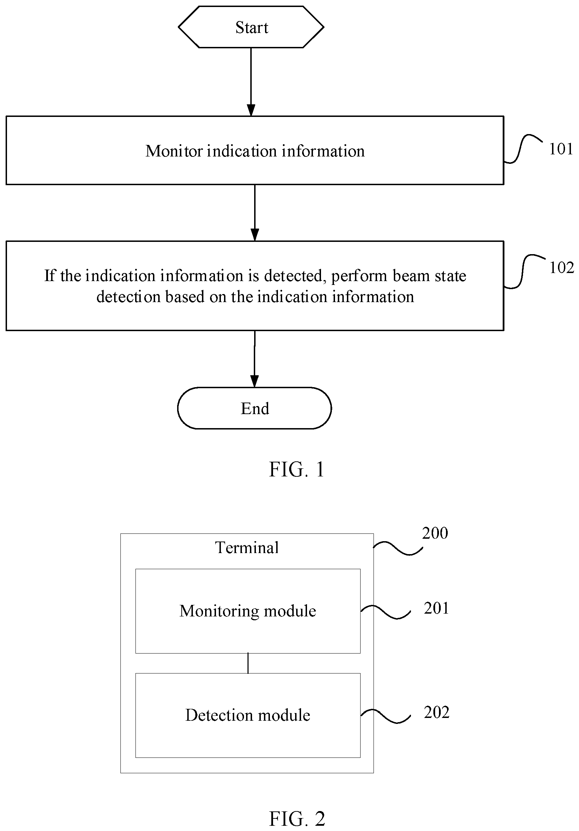

As shown in FIG. 1, an embodiment of this disclosure provides a beam state detection method, applied to a terminal and including the following steps.

Step 101: Monitor indication information.

The indication information is generated by the terminal when a reference signal used for beam failure detection is not detected. In this embodiment of this disclosure, such a feature of generating the indication information when the reference signal used for beam failure detection is not detected is introduced. The terminal performs detection on the reference signal used for beam failure detection. When the reference signal is not detected, the terminal generates indication information indicating that the reference signal is not detected. It should be noted that the aforementioned reference signal is a synchronous signal block (SSB) and/or a channel state information-reference signal (CSI-RS).

Step 102: If the indication information is detected, perform beam state detection based on the indication information.

It should be noted that when the indication information is detected, it indicates that the terminal detects no reference signal used for beam failure detection, and the terminal performs beam state detection in this case to ensure accuracy of beam state detection as much as possible. The beam state detection herein is mainly beam failure detection.

It should be noted that, in this embodiment of this disclosure, because the parameter of the indication information generated when the reference signal used for beam failure detection is not detected is introduced, a counter, that is, a counter (for example, NO_RS_COUNTER) corresponding to the indication information, needs to be set for this parameter, and a preset threshold (that is, a maximum threshold of a count value) is set for the counter, where the preset threshold is configured by a network-side device or specified by a protocol.

Further, in a specific implementation of step 102, at least one of the following manners is used.

A1: After the indication information is detected, set a target counter.

It should be noted that the target counter includes: at least one of the counter corresponding to the indication information and a beam failure instance counter.

Specifically, when the target counter includes the counter corresponding to the indication information, an implementation of setting a target counter is: setting the counter corresponding to the indication information to count. It should be noted that the setting the counter to count herein refers to an operation of adding 1 to the counter. Specific implementation is that: each time after the terminal detects one piece of indication information indicating that the reference signal used for beam failure detection is not detected, the terminal adds 1 to a count value of the counter corresponding to the indication information indicating that the reference signal used for beam failure detection is not detected.

Specifically, when the target counter includes the beam failure instance counter, an implementation of setting a target counter is: keeping a count value of the beam failure instance counter unchanged; or
resetting a count value of the beam failure instance counter.

Specific implementation is that: each time after the terminal detects one piece of indication information indicating that the reference signal used for beam failure detection is not detected, the terminal keeps the current beam failure instance counter (BFI COUNTER) unchanged (that is, keeps a current count value unchanged) or resets the beam failure instance counter (that is, sets the beam failure instance counter to an initial value, such as "0").

A2: When the count value of the counter corresponding to the indication information is equal to a preset threshold, set the beam failure instance counter.

It should be noted that the count value of the counter corresponding to the indication information being equal to the preset threshold means that the count value of the counter is greater than or equal to a maximum preset threshold. A specific implementation for setting the beam failure instance counter is: resetting the count value of the beam failure instance counter; or
setting the beam failure instance counter to count.

For example, when the count value of the counter corresponding to the indication information is equal to the preset threshold, the terminal resets the current beam failure instance counter (that is, sets the beam failure instance counter to an initial value, such as "0") or adds 1 to the count value of the beam failure instance counter.

A3: When at least one of the following is satisfied: the indication information being detected, and the count value of the counter corresponding to the indication information being equal to the preset threshold, set a beam failure detection timer.

It should be noted that the setting a beam failure detection timer in this manner can be implemented in one of the following manners.
A31: Keep a count value of the beam failure detection timer unchanged.
A32: Stop running the beam failure detection timer.
A33: Start or restart the beam failure detection timer.

For example, each time after the terminal detects one piece of indication information indicating that the reference signal for beam failure detection is not detected, the terminal keeps the current beam failure detection timer (beam Failure Detection Timer) unchanged (that is, keeps the current count value unchanged and keeps the counter running), or stops the beam failure detection timer (that is, being set to the initial value, such as "0"; and running the timer is stopped), or starts (which is called start if the beam failure detection timer has not been started before) the beam failure detection timer, or restarts (which is called restart if the beam failure detection timer has been started before) the beam failure detection timer.

For example, when the count value of the counter corresponding to the indication information is equal to the preset threshold, the current beam failure detection timer remains unchanged (that is, the current count value remains unchanged and the counter keeps running); or the beam failure detection timer is stopped (that is, being set to the initial value, such as "0"; and running the timer is stopped); or the beam failure detection timer is started (which is called start herein if the beam failure detection timer has not been started before); or the beam failure detection timer is restarted (which is called restart herein if the beam failure detection timer has been started before).

A4: When the count value of the counter corresponding to the indication information is equal to the preset threshold, determine that a beam state is beam failure.

In this manner, provided that the count value of the counter corresponding to the obtained indication information is greater than or equal to the preset threshold (that is, the maximum preset threshold), the beam state can be directly determined as a beam failure.

A5: When the beam failure detection timer expires, reset the count value of the counter corresponding to the indication information.

It should be noted that in this implementation, when the beam failure detection timer expires, the count value of the counter corresponding to the indication information is set to the initial value, such as "0".

It should be noted that, because a physical layer of the terminal receives the beam failure indication through beam-based reception, a specific implementation of step 102 in this embodiment of this disclosure further includes:
obtaining a beam failure indication; and
performing beam state detection based on the beam failure indication and the indication information.

Specifically, the performing beam state detection based on the beam failure indication and the indication information may be implemented in the following manner.

A6: When the beam failure indication is detected, reset the count value of the counter corresponding to the indication information.

This implementation is specifically as follows: Each time after the terminal detects one beam failure indication (for example, "beam failure instance indication"), the terminal resets the counter corresponding to the indication information (that is, sets the counter to the initial value, such as "0").

It should be noted that, in this embodiment of this disclosure, the terminal can implement step 102 by using any combination of one or more of the foregoing A1 to A6.

It should also be noted herein that the beam state detection performed by the terminal further includes the following behaviors:
B1. After the terminal detects one beam failure indication, the terminal adds 1 to the beam failure instance counter (for example, BFI_COUNTER = BFI_COUNTER+1);
B2: After the terminal detects one beam failure indication, the terminal starts or restarts the beam failure detection timer.
B3: If the beam failure detection timer expires, the beam failure instance counter is reset (for example, a value is reset to "0").
B4. When the count value of the beam failure instance counter is equal to a maximum count threshold (for example, the count value of the beam failure instance counter is greater than or equal to the maximum count threshold), the terminal considers that a detected beam has a beam failure.

It should be noted that the maximum count threshold of the beam failure instance counter in this manner is configured by the network-side device or specified by a protocol.

It should also be noted that after the beam state detection is performed, when the beam failure occurs, the terminal initiates a beam failure recovery procedure.

It should be noted that in this embodiment of this disclosure, the terminal can monitor the beam state based on whether the parameter of the indication information is generated when the reference signal is not detected, so that a beam state detection result for the terminal is closer to a beam state obtained in a case in which a reference signal used for beam failure detection is transmitted, thereby reducing a probability of beam failure misjudgment, ensuring accuracy of beam state detection, and further ensuring reliability of network communication.

As shown in FIG. 2, a terminal 200 provided in an embodiment of this disclosure includes:
a monitoring module 201, configured to monitor indication information, where the indication information is generated by the terminal when the terminal detects no reference signal used for beam failure detection; and
a detection module 202, configured to: if the indication information is detected, perform beam state detection based on the indication information.

Further, the detection module 202 includes at least one of the following units:
a first setting unit, configured to: after the indication information is detected, set a target counter, where the target counter includes: at least one of a counter corresponding to the indication information and a beam failure instance counter;
a second setting unit, configured to: when a count value of the counter corresponding to the indication information is equal to a preset threshold, set the beam failure instance counter;
a third setting unit, configured to: when at least one of the following is satisfied: that the indication information is detected, and that the count value of the counter corresponding to the indication information is equal to the preset threshold, set a beam failure detection timer;
a determining unit, configured to: when the count value of the counter corresponding to the indication information is equal to the preset threshold, determine that a beam state is beam failure; and
a resetting unit, configured to: when the beam failure detection timer expires, reset the count value of the counter corresponding to the indication information.

Optionally, when the target counter includes the counter corresponding to the indication information, the first setting unit is configured to:
set the counter corresponding to the indication information to count.

Optionally, when the target counter includes the beam failure instance counter, the first setting unit is configured to:
keep a count value of the beam failure instance counter unchanged; or
reset a count value of the beam failure instance counter.

Further, the second setting unit is configured to:
reset the count value of the beam failure instance counter; or
set the beam failure instance counter to count.

Further, the third setting unit is configured to perform one of the following manners:
keep a count value of the beam failure detection timer unchanged;
stop running the beam failure detection timer; and
start or restart the beam failure detection timer.

Specifically, the preset threshold is configured by the network side device or specified by a protocol.

Optionally, the detection module 202 further includes:
an obtaining unit, configured to obtain a beam failure indication; and
a detection unit, configured to perform beam state detection based on the beam failure indication and the indication information.

Further, the detection unit is configured to:
when the beam failure indication is detected, reset the count value of the counter corresponding to the indication information.

Further, the terminal further includes:
an initiating module, configured to: when a beam failure is detected, initiate a beam failure recovery procedure.

It should be noted that the terminal embodiment is the terminal corresponding to the foregoing beam state detection method applied to a terminal side. All implementations of the foregoing embodiment are applicable to the terminal embodiment, with the same technical effects achieved.

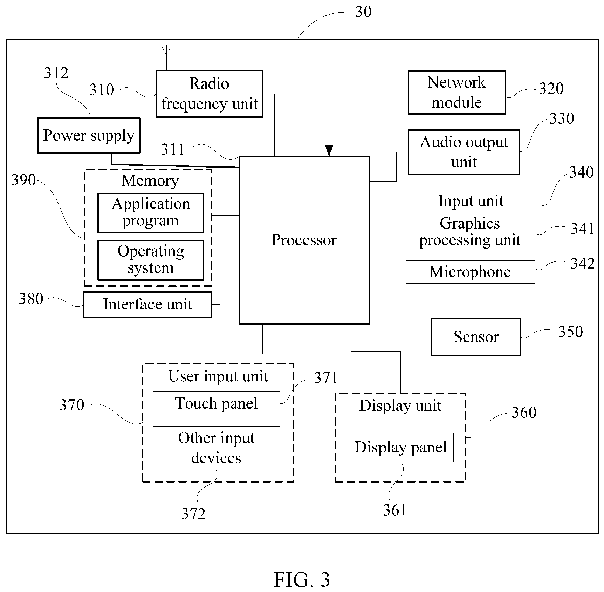

FIG. 3 is a schematic structural diagram of hardware of a terminal implementing the embodiments of this disclosure.

The terminal 30 includes but is not limited to components such as a radio frequency unit 310, a network module 320, an audio output unit 330, an input unit 340, a sensor 350, a display unit 360, a user input unit 370, an interface unit 380, a memory 390, a processor 311, and a power supply 312. A person skilled in the art may understand that the terminal is not limited to a terminal structure shown in FIG. 3. The terminal may include more or fewer components than those shown in the figure, or a combination of some of the components, or a different arrangement of the components. In this embodiment of this disclosure, the terminal includes but is not limited to a mobile phone, a tablet computer, a notebook computer, a palmtop computer, an in-vehicle terminal, a wearable device, a pedometer, and the like.

The processor 311 is configured to: monitor indication information, where the indication information is generated by the terminal when the terminal detects no reference signal used for beam failure detection; and if the indication information is detected, perform beam state detection based on the indication information.

The feature of generating the indication information when the reference signal used for beam failure detection is not detected is introduced, so that the terminal in this embodiment of this disclosure performs beam state detection based on the indication information and the terminal can determine channel quality based on an actual transmission state of the reference signal, thereby ensuring accuracy of beam state detection.

It should be understood that in this embodiment of this disclosure, the radio frequency unit 310 may be configured to: receive and send a signal in an information receiving/sending process or during a call; and specifically, after receiving downlink data from a network device, send the downlink information to the processor 311 for processing, and in addition, send uplink data to the network device. Generally, the radio frequency unit 310 includes but is not limited to an antenna, at least one amplifier, a transceiver, a coupler, a low noise amplifier, a duplexer, and the like. In addition, the radio frequency unit 310 may further communicate with a network and other devices through a wireless communications system.

The terminal provides a user with wireless broadband internet access through the network module 320, for example, helping the user to send or receive an e-mail, to browse a web page, or to access streaming media.

The audio output unit 330 may convert audio data received by the radio frequency unit 310 or the network module 320 or stored in the memory 390 into an audio signal and output the audio signal as a sound. Furthermore, the audio output unit 330 may also provide audio output (for example, a call signal received sound or a message received sound) related to a specific function performed by the terminal 30. The audio output unit 330 includes a speaker, a buzzer, a telephone receiver, and the like.

The input unit 340 is configured to receive an audio or video signal. The input unit 340 may include a graphics processing unit (Graphics Processing Unit, GPU) 341 and a microphone 342, and the graphics processing unit 341 processes image data of a still picture or a video obtained by an image capture apparatus (for example, a camera) in an image capture mode or a video capture mode. A processed image frame may be displayed on the display unit 360. An image frame processed by the graphics processing unit 341 may be stored in the memory 390 (or another storage medium) or sent by the radio frequency unit 310 or the network module 320. The microphone 342 can receive a sound and can process such sound into audio data. The processed audio data can be converted into an output format that can be sent to a mobile communication network device through the radio frequency unit 310 in a telephone call mode.

The terminal 30 further includes at least one sensor 350, such as an optical sensor, a motion sensor, and other sensors. Specifically, the optical sensor includes an ambient light sensor and a proximity sensor, where the ambient light sensor can adjust luminance of the display panel 361 based on brightness of ambient light, and the proximity sensor can turn off the display panel 361 and/or backlight when the terminal 30 is moved to an ear. As a type of motion sensor, an accelerometer sensor can detect magnitudes of accelerations in all directions (usually three axes), can detect a magnitude and a direction of gravity when the terminal is in a static state, and can be applied to terminal posture recognition (such as screen switching between portrait and landscape, related games, and magnetometer posture calibration), functions related to vibration recognition (such as pedometer and tapping), and the like. The sensor 350 may also include a fingerprint sensor, a pressure sensor, an iris sensor, a molecular sensor, a gyroscope, a barometer, a hygrometer, a thermometer, an infrared sensor, and the like. Details are not described herein.

The display unit 360 is configured to display information input by the user or information provided for the user. The display unit 360 may include a display panel 361, and the display panel 361 may be configured in a form of a liquid crystal display (Liquid Crystal Display, LCD), an organic light-emitting diode (Organic Light-Emitting Diode, OLED), or the like.

The user input unit 370 may be configured to receive input digit or character information and generate key signal input related to user setting and function control of the terminal. Specifically, the user input unit 370 includes a touch panel 371 and other input devices 372. The touch panel 371, also referred to as a touchscreen, may capture a touch operation performed by a user on or near the touch panel (for example, an operation performed by the user on the touch panel 371 or near the touch panel 371 by using any appropriate object or accessory such as a finger or a stylus). The touch panel 371 may include two parts: a touch detection apparatus and a touch controller. The touch detection apparatus detects a touch position of the user, detects a signal brought by a touch operation, and transmits the signal to the touch controller. The touch controller receives touch information from the touch detection apparatus, converts the touch information to point coordinates, and sends the point coordinates to the processor 311, and receives and executes a command sent by the processor 311. In addition, the touch panel 371 may be implemented in a plurality of forms, for example, as a resistive, capacitive, infrared, or surface acoustic wave touch panel. The user input unit 370 may further include other input devices 372 in addition to the touch panel 371. Specifically, the other input devices 372 may include but are not limited to a physical keyboard, a function key (such as a volume control key or a power on/off key), a trackball, a mouse, a joystick, and the like. Details are not described herein.

Further, the touch panel 371 may cover the display panel 361. After detecting a touch operation on or near the touch panel 371, the touch panel 371 transmits information about the touch operation to the processor 311 for the processor 311 to determine a touch event type, and then the processor 311 provides a corresponding visual output on the display panel 361 based on the touch event type. Although in FIG. 3, the touch panel 371 and the display panel 361 act as two independent parts to implement input and output functions of the terminal, in some embodiments, the touch panel 371 and the display panel 361 may be integrated to implement the input and output functions of the terminal. Details are not limited herein.

The interface unit 380 is an interface connecting an external apparatus to the terminal 30. For example, the external apparatus may include a wired or wireless headphone port, an external power (or battery charger) port, a wired or wireless data port, a memory card port, a port for connecting an apparatus provided with a recognition module, an audio input/output (I/O) port, a video I/O port, an earphone port, and the like. The interface unit 380 may be configured to: receive input (for example, data information and power) from the external apparatus, and transmit the received input to one or more elements within the terminal 30, or may be configured to transmit data between the terminal 30 and the external apparatus.

The memory 390 may be configured to store software programs and various data. The memory 390 may mainly include a program storage area and a data storage area. The program storage area may store an operating system, an application program required for at least one function (such as a sound play function and an image play function), and the like. The data storage area may store data created based on use of the mobile phone (such as audio data and a phone book), and the like. In addition, the memory 390 may include a high-speed random access memory, or may include a non-volatile memory, for example, at least one magnetic disk storage device, a flash memory device, or other volatile solid-state storage devices.

The processor 311 is a control center of the terminal, and is connected to all components of the terminal by using various interfaces and lines. By running or executing software programs and/or modules stored in the memory 390 and calling data stored in the memory 390, the processor 311 executes various functions of the terminal and processes data, so as to perform overall monitoring on the terminal. The processor 311 may include one or more processing units. Optionally, an application processor and a modem processor may be integrated into the processor 311. The application processor mainly processes an operating system, a user interface, an application program, and the like. The modem processor mainly processes wireless communication. It may be understood that the modem processor may alternatively not be integrated into the processor 311.

The terminal 30 further includes the power supply 312 (for example, a battery) supplying power to all components. Optionally, the power supply 312 may be logically connected to the processor 311 through a power management system. In this way, functions such as charge management, discharge management, and power consumption management are implemented by using the power management system.

In addition, the terminal 30 includes some functional modules that are not shown, details of which are not described herein.

Optionally, an embodiment of this disclosure further provides a terminal, including a processor 311, a memory 390, and a computer program stored in the memory 390 and capable of running on the processor 311, where when the computer program is executed by the processor 311, the procedures of the foregoing beam state detection method embodiment applied to the terminal side are implemented, with the same technical effects achieved. To avoid repetition, details are not described herein again.

An embodiment of this disclosure further provides a computer-readable storage medium, where the computer-readable storage medium stores a computer program, and when the computer program is executed by a processor, the procedures of the foregoing beam state detection method embodiment applied to the terminal side are implemented, with the same technical effects achieved. To avoid repetition, details are not described herein. The computer-readable storage medium is, for example, a read-only memory (Read-Only Memory, ROM), a random access memory (Random Access Memory, RAM), a magnetic disk, an optical disc.

The foregoing descriptions are merely optional embodiments of this disclosure. It should be pointed out that various improvements and modifications made by a person of ordinary skill in the art without departing from the principle of this disclosure shall fall within the protection scope of this disclosure.

## Claims

1. A beam state detection method, applied to a terminal and comprising:
monitoring indication information, wherein the indication information is generated by the terminal when the terminal detects no reference signal used for beam failure detection; and
if the indication information is detected, performing beam state detection based on the indication information.

2. The beam state detection method according to claim 1, wherein the performing beam state detection based on the indication information comprises at least one of the following manners:
after the indication information is detected, setting a target counter, wherein the target counter comprises: at least one of a counter corresponding to the indication information and a beam failure instance counter;
when a count value of the counter corresponding to the indication information is equal to a preset threshold, setting the beam failure instance counter;
when at least one of the following is satisfied: that the indication information is detected, and that the count value of the counter corresponding to the indication information is equal to the preset threshold, setting a beam failure detection timer;
when the count value of the counter corresponding to the indication information is equal to the preset threshold, determining that a beam state is beam failure;
when the beam failure detection timer expires, resetting the count value of the counter corresponding to the indication information.

3. The beam state detection method according to claim 2, wherein when the target counter comprises the counter corresponding to the indication information, the setting a target counter comprises:
setting the counter corresponding to the indication information to count.

4. The beam state detection method according to claim 2, wherein when the target counter comprises the beam failure instance counter, the setting a target counter comprises:
keeping a count value of the beam failure instance counter unchanged; or
resetting a count value of the beam failure instance counter.

5. The beam state detection method according to claim 2, wherein the setting the beam failure instance counter comprises:
resetting a count value of the beam failure instance counter; or
setting the beam failure instance counter to count.

6. The beam state detection method according to claim 2, wherein the setting the beam failure instance counter comprises one of the following manners:
keeping a count value of the beam failure detection timer unchanged;
stopping the beam failure detection timer, if running; and
starting or restarting the beam failure detection timer.

7. The beam state detection method according to claim 2, wherein the preset threshold is configured by a network-side device or specified by a protocol.

8. The beam state detection method according to claim 2, wherein the performing beam state detection based on the indication information further comprises:
obtaining a beam failure indication; and
performing beam state detection based on the beam failure indication and the indication information.

9. The beam state detection method according to claim 8, wherein the performing beam state detection based on the beam failure indication and the indication information comprises:
when the beam failure indication is detected, resetting the count value of the counter corresponding to the indication information.

10. The beam state detection method according to claim 1, wherein after the performing beam state detection based on the indication information, the method further comprises:
when a beam failure is detected, initiating a beam failure recovery procedure.

11. A terminal, comprising:
a monitoring module, configured to monitor indication information, wherein the indication information is generated by the terminal when the terminal detects no reference signal used for beam failure detection; and
a detection module, configured to: if the indication information is detected, perform beam state detection based on the indication information.

12. The terminal according to claim 11, wherein the detection module comprises at least one of the following units:
a first setting unit, configured to: after the indication information is detected, set a target counter, wherein the target counter comprises: at least one of a counter corresponding to the indication information and a beam failure instance counter;
a second setting unit, configured to: when a count value of the counter corresponding to the indication information is equal to a preset threshold, set the beam failure instance counter;
a third setting unit, configured to: when at least one of the following is satisfied: that the indication information is detected, and that the count value of the counter corresponding to the indication information is equal to the preset threshold, set a beam failure detection timer;
a determining unit, configured to: when the count value of the counter corresponding to the indication information is equal to the preset threshold, determine that a beam state is beam failure; and
a resetting unit, configured to: when the beam failure detection timer expires, reset the count value of the counter corresponding to the indication information.

13. The terminal according to claim 12, wherein when the target counter comprises the counter corresponding to the indication information, the first setting unit is configured to:
set the counter corresponding to the indication information to count.

14. The terminal according to claim 12, wherein when the target counter comprises the beam failure instance counter, the first setting unit is configured to:
keep a count value of the beam failure instance counter unchanged; or
reset a count value of the beam failure instance counter.

15. The terminal according to claim 12, wherein the second setting unit is configured to:
reset a count value of the beam failure instance counter; or
set the beam failure instance counter to count.

16. The terminal according to claim 12, wherein the third setting unit is configured to perform one of the following manners:
keep a count value of the beam failure detection timer unchanged;
stop running the beam failure detection timer; and
start or restart the beam failure detection timer.

17. The terminal according to claim 12, wherein the preset threshold is configured by a network-side device or specified by a protocol.

18. The terminal according to claim 12, wherein the detection module further comprises:
an obtaining unit, configured to obtain a beam failure indication; and
a detection unit, configured to perform beam state detection based on the beam failure indication and the indication information.

19. The terminal according to claim 18, wherein the detection unit is configured to:
when the beam failure indication is detected, reset the count value of the counter corresponding to the indication information.

20. The terminal according to claim 11, further comprising:
an initiating module, configured to: when a beam failure is detected, initiate a beam failure recovery procedure.

21. A terminal, comprising a memory, a processor, and a computer program stored in the memory and capable of running on the processor, wherein when the computer program is executed by the processor, the steps of the beam state detection method according to any one of claims 1 to 10 are implemented.

22. A computer-readable storage medium, storing a computer program, wherein when the computer program is executed by a processor, the steps of the beam state detection method according to any one of claims 1 to 10 are implemented.
